# EUROPÄISCHE PATENTANMELDUNG

(11) **EP 4 389 941 A1**
(43) Veröffentlichungstag der Anmeldung: **26.06.2024**
(21) Anmeldenummer: 22215314.0
(22) Anmeldetag: 21.12.2022
(51) Int. Cl.: C25D 3/64, C25D 5/48, A01N 59/16

(54) **METALL-OBJEKT MIT SCHUTZ-SCHICHT, VERFAHREN ZUM HERSTELLEN DES METALL-OBJEKTS MIT DER SCHUTZ-SCHICHT UND COMPUTER-PROGRAMM-PRODUKT MIT EINEM DIGITALEN ZWILLING ZUR SIMULATION EINER WIRKUNG DER SCHUTZ-SCHICHT**

(71) Anmelder: Siemens Aktiengesellschaft, 80333 München (DE)
(72) Erfinder: Doye, Christian, 13156 Berlin (DE); Jensen, Jens Dahl, 14050 Berlin (DE); Krüger, Ursus, 14089 Berlin (DE); Winkler, Gabriele, 13587 Berlin (DE)
(74) Vertreter: Siemens Patent Attorneys

(57) **Zusammenfassung**

Die Erfindung betrifft ein Metall-Objekt mit einer Schutz-Schicht auf einer Metall-Oberfläche des Metall-Objekts, wobei die Schutz-Schicht für ein Hemmen einer Anreicherung von biologischem Material (Mikroorgansimen oder Viren) auf der Metall-Oberfläche ausgestaltet ist. Das Metall-Objekt ist dadurch gekennzeichnet, dass die Schutz-Schicht eine poröse Silber-Schicht aufweist, die neben Silber eine Vielzahl von Silber-Poren aufweist, und in den Silber-Poren der Silber-Schicht Mangandioxid (MnO₂, Braunstein) derart angeordnet ist, dass in Gegenwart von Wasser galvanische Mikro-Zellen mit Mikro-Anoden mit dem Silber und mit Mikro-Kathoden mit dem Mangandioxid gebildet sind. Daneben wird ein Verfahren zum Herstellen des Metall-Objekts mit der Schutz-Schicht angegeben. Mit Hilfe des Computer-Programm-Produkts wird die Wirkung der Schutz-Schicht simuliert.

## Beschreibung

Die Erfindung betrifft ein Metall-Objekt mit Schutz-Schicht auf einer Metall-Oberfläche des Metall-Objekts sowie ein Verfahren zum Herstellen des Metall-Objekts mit der Schutz-Schicht. Daneben wird ein Computer-Programm-Produkt mit einem digitalen Zwilling zur Simulation einer Wirkung der Schutz-Schicht angegeben.

Das Metall-Objekt ist ein metallischer Gegenstand. In Gegenwart von Wasser kann sich auf einer Metall-Oberfläche des Metall-Objekts ein Bio-Film (Schleim-Schicht mit Mikro-organismen wie Bakterien, Algen und Pilzen) bilden.

Es ist bekannt, zum Hemmen einer Anreicherung von biologischem Material, beispielsweise zum Hemmen der Bildung eines Bio-Films auf der Metall-Oberfläche die Metall-Oberfläche mit einer Schutz-Schicht (Beschichtung) zu versehen. Eine solche Schutz-Schicht wirkt beispielsweise apathogenen (antipathogen bzw. antimikrobiell und/oder antiviral). Mit der apathogenen Schutz-Schicht wird das Wachstum von biologischem Material in Form von Krankheits-Erregern gehemmt. Die apathogene Schutz-Schicht enthält apathogen wirkende Substanzen wie Metalle oder Metall-Verbindungen (z.B. Metalloxide). Die apathogen wirkenden Substanzen werden Farben, Lacken oder Polymerwerkstoffen zugemischt und dann durch Streichen oder Sprühen auf die Metall-Oberfläche des Metall-Objekts appliziert.

Gängige apathogen wirkende Substanzen sind Kupfer bzw. Kupferverbindungen wie Cuprit (Kupferoxid), Kupferthiocyanat, Kupferpyridin oder Silber (z.B. in Form von Silber-Nanopartikeln) bzw. Silberverbindungen wie Silberchlorid, Silbernitrat, Silberoxid, Silbernatrium-Hydrogenzirconiumphosphat und Silberzeolith A.

Die aus ihren Metall-Verbindungen freiwerdenden Metall-Ionen (Kupfer- oder Silber-Ionen), sowie die Silber-Nanopartikel reagieren mit schwefel- und phosphathaltigen Enzymen einer Zell-Membran (Zell-Wand) einer Zelle des Krankheits-Erregers und stören damit eine lebensnotwendige Transportfunktion der Zell-Membran. Die Metall-Ionen werden von der Zelle aufgenommen und an schwefel- und phosphathaltige Makromoleküle gebunden (z.B. an Aminosäuren von Proteinen). Die Metall-Ionen können sich auch an eine DNA (Desoxyribonukleinsäure) oder eine RNA (Ribonukleinsäure) einer Zelle binden und damit eine Reproduktion der Zelle verhindern. Die beschriebenen Effekte führen zum Zelltod.

Kupfer- und Silberverbindungen sind aber nicht nur für Mikroorganismen und/oder Viren giftig, sondern können durch die gleichen Mechanismen auch für höheren Lebewesen gefährlich werden, insbesondere dadurch, dass sie sich in der Umwelt anreichern.

Aufgabe der vorliegenden Erfindung ist es, aufzuzeigen, wie die Anreicherung von biologischem Material auf einer Metall-Oberfläche eines Metall-Objekts unterdrückt werden kann.

Zum Lösen der Aufgabe wird ein Metall-Objekt mit einer Schutz-Schicht auf einer Metall-Oberfläche des Metall-Objekts angegeben, wobei die Schutz-Schicht für ein Hemmen einer Anreicherung (Ansiedlung) von biologischem Material auf der Metall-Oberfläche ausgestaltet ist. Das Metall-Objekt ist dadurch gekennzeichnet, dass die Schutz-Schicht eine poröse Silber-Schicht aufweist, die neben Silber eine Vielzahl von Silber-Poren aufweist, und in den Silber-Poren der Silber-Schicht Mangandioxid (Mangan(IV)-Oxid, MnO₂, Braunstein) derart angeordnet ist, dass in Gegenwart von Wasser galvanische Mikro-Zellen mit Mikro-Anoden mit dem Silber und mit Mikro-Kathoden mit dem Mangandioxid gebildet sind.

Zum Lösen der Aufgabe wird auch ein Verfahren zum Herstellen des Metall-Objekts mit folgenden Verfahrens-Schritten angegeben:
a) Bereitstellen eines Ausgangs-Objekts des Metall-Objekts mit einer Ausgangs-Metall-Oberfläche der Metall-Oberfläche und
b) Anordnen der Schutz-Schicht auf der Ausgangs-Metall-Oberfläche derart, dass das Metall-Objekt entsteht.

Darüber hinaus wird zur Lösung der Aufgabe auch ein Computer-Programm-Produkt mit einem digitalen Zwilling zur Simulation einer Wirkung der Schutz-Schicht des Metall-Objekts angegeben.

Unter biologischem Material wird hier ein Material verstanden, das genetische Informationen enthält und sich selbst reproduzieren kann (z.B. Mikroorganismen) oder in einem biologischen System reproduziert werden kann (z.B. Viren). Mit der Schutz-Schicht wird in Gegenwart von Wasser die Ansiedlung von biologischem Material erschwert bzw. unterbunden. So kann sich kein Bio-Film auf der Metall-Oberfläche bzw. auf der auf der Metall-Oberfläche aufgebrachten Schutz-Schicht bilden.

Eine galvanische Mikro-Zelle (galvanisches Mikro-Element) ist ein elektrochemischer Reaktor. In Gegenwart von Feuchtigkeit entsteht ein für das galvanische Mikro-Element benötigter Elektrolyt.

Feuchtigkeit (Wasser) kann in verschiedenen Medien enthalten sein, z.B. in Luft (Luftfeuchtigkeit) oder in Ausdünstungen (Schweiß), Sekreten und Exkrementen von Lebewesen. Mit Hilfe der Feuchtigkeit in den verschiedenen Medien bildet sich die mikro-galvanische Elemente. So können (mikro-)elektrische Felder entstehen. An der (Mikro-)Kathode werden dabei mit Hilfe von im Wasser gelöstem Sauerstoff reaktive Sauerstoff-Radikale wie Hyperoxide (Superoxide) und Hydroxyl-Radikale elektrochemisch gebildet. Nukleinbasen, die in den Nukleinsäuren DNA und RNA (Ribonukleinsäuren) enthalten und für die genetische Information verantwortlich sind, bestehen aus einem Grundgerüst heterocyclischer aromatischer Amine (Purine und Pyrimidine) mit Doppelbindungen. Die genannten Radikale weisen ungepaarte Elektronen in der äußeren Elektronenhülle auf und greifen die Doppelbindungen der Amine an, in dem sie mit den π-Elektronen ihre äußere Elektronenhülle auffüllen, um die Edelgaskonfiguration zu erreichen. Damit geht ein Verlust des Doppelbindungssystem im Ring einher und die Nukleinbasen können ihre Information zur Proteinbiosynthese nicht mehr weitergeben und die Replikation der Nukleinsäuren DNA und RNA wird unterbrochen.

Beispielsweise verfügt der Mikroorganismus auch über eine proteinogene Aminosäure mit Schwefel. Der Schwefel der Aminosäure kann durch reaktive Sauerstoff-Spezies zu einem Sulfoxid oxidiert werden. Eine Hydroxyl-Gruppe einer SeitenKette einer proteinogenen Aminosäure kann mit Hilfe von reaktiven Sauerstoff-Spezien zu einer Aldehyd- oder einer Carboxyl-Gruppe oxidiert werden. Es wird eine chemisch veränderte Aminosäure gebildet. Die chemisch veränderte Aminosäure kann nicht mehr am Aufbau lebensnotwendiger Proteine teilnehmen. Folglich stirbt der Mikroorganismus.

Die Erfindung basiert auf der Bildung der Mikro-Zellen mit Silber und mit Mangandioxid. Zur Bildung der Mikro-Zellen wird auf die poröse Silber-Schicht, die auf der Metall-Oberfläche aufgebracht ist, eine Mangandioxid-Schicht aufgetragen.

Die poröse Silber-Schicht weist offene Poren auf. Im Hinblick auf die Silber-Poren weist die Silber-Schicht vorzugsweise eine aus dem Bereich von 10 Vol.% bis 90 Vol.% und insbesondere eine aus dem Bereich von 50 Vol.% bis 90 Vol.% ausgewählte Porosität 211 auf.

Aufgrund der Silber-Poren ist die Porosität der Silber-Schicht vorzugsweise aus dem Bereich von 10 Vol.% bis 90 Vol.% und insbesondere aus dem Bereich von 50 Vol.% bis 90 Vol.% auf. Damit wird eine Dichte an Mirko-Zellen in der Silber-Schicht erreicht, so dass das Anreichern von biologischem Material wirksam gehemmt werden kann.

In einer besonderen Ausgestaltung ist zwischen der Metall-Oberfläche und der porösen Silber-Schicht eine Haftvermittlungs-Schicht zur Verbindung der porösen Silber-Schicht und der Metall-Oberfläche angeordnet. Die Haftvermittlungs-Schicht sorgt für eine Verbesserung der Verbindung zwischen der Silber-Schicht und der Metall-Oberfläche. Mit Hilfe der Haftvermittlungs-Schicht ist dafür gesorgt, dass sich die Schutz-Schicht nicht ohne Weiteres von der Metall-Oberfläche lösen kann. Die Haftvermittlungs-Schicht ist beispielsweise eine Wood-Nickel-Schicht, die aus einem nickelhaltigen Elektrolyten mit Salz-Säure und Nickel-Chlorid abgeschieden wird.

Das Metall-Objekt kann aus einem beliebigen Metall oder aus einer beliebigen Metall-Legierung bestehen. Insbesondere bei Metall-Objekten mit Metallen, die für biologische Organsimen selbst nicht wesentlich toxisch sind, ist der Einsatz der Erfindung vorteilhaft.

In einer besonderen Ausgestaltung weisen das Metall-Objekt und/oder die Metall-Oberfläche elementares Eisen auf. Das Metall-Objekt und die Metall-Oberfläche des Metall-Objekts können dabei aus mehr oder weniger reinem Eisen bestehen. Ebenso denkbar sind Eisen-Legierungen (z.B. verschiedenste Stähle). Eisen bzw. Eisen-Legierungen werden als gängige Werkstoffe eingesetzt. Gerade hier ist es vorteilhaft, die Anreicherung von biologischem Material an den Metall-Oberflächen der entsprechenden Metall-Objekte zu unterdrücken bzw. zu vermeiden.

Insbesondere bei Metall-Objekten mit relativ großen Metall-Oberflächen kann die Anreicherung von biologischem Material unterdrückt werden. Dabei ist jede Ausgestaltung des Metall-Objekts denkbar, die zu einer relativ großen Metall-Oberfläche führt. Vorzugsweise weist das Metall-Objekt mindestens ein metallisches Werkstück auf, das aus der Gruppe Metall-Faden, Metall-Draht, Metall-Stab und Metall-Geflecht ausgewählt ist. Das Metall-Geflecht weist eine Vielzahl von Metall-Fäden oder Metall-Drähten auf.

Die beschichteten Metall- Fäden, - Stäbe, - Drähte und Geflechte sind beispielsweise in Gebrauchsgegenständen eingebaut, die Wasser zur Leitung, zum Aufbewahren, zum Kühlen und zum Erwärmen enthalten. Bleibt das Wasser längere Zeit in diesen Gebrauchsgegenständen stehen, so können sich an ihren Wänden Bio-Filme bilden. Mit der Schutz-Schicht wird die (unerwünschte) Bildung von Bio-Filmen in diesen GebrauchsGegenständen verhindert.

Für die Wirkung der Schutz-Schicht genügt es, diese dünn auf der Metall-Oberfläche aufzutragen. Als besonderes vorteilhaft hat es sich herausgestellt, wenn die Schicht-Dicke der Schutz-Schicht aus dem Bereich von 1 µm bis 10 µm und insbesondere aus dem Bereich von 2 µm bis 5 µm ausgewählt ist. Mit der Schicht-Dicke ist eine Wirkung der Schutz-Schicht bei einem möglichst geringen Materialeisatz gewährleistet.

In einer besonderen Ausgestaltung des Verfahrens zum Herstellen des Metall-Objekts werden zum Anordnen der Schutz-Schicht auf der Ausgangs-Metall-Oberfläche folgende Verfahrens-Schritte durchgeführt werden:
ba) Elektrochemisches Abscheiden des Silbers und elektrochemisches Abscheiden zumindest eines Hilfs-Metalls mit einem Redox-Potential unter dem von Silber auf der Ausgangs-Metall-Oberfläche, so dass eine Ausgangs-Schutz-Schicht der Schutz-Schicht entsteht,
bb) Entfernen des Hilfs-Metalls aus der Ausgangs-Schutz-Schicht, so dass die Silber-Poren der porösen Silber-Schicht gebildet werden, und
bc) Befüllen der Silber-Poren mit Mangandioxid.

In einer besonderen Ausgestaltung wird zum Anordnen der Schutz-Schicht ein thermisches Spritz-Verfahren angewendet. Beispielsweise wird für das thermische Spritz-Verfahren Raney-Silber (siehe unten) vorab hergestellt und anschließend zur Bildung der porösen Silber-Schicht per selektivem Ätzen von Aluminium, vorzugweise, oder Zink in einer alkalischen Lösung mit Hilfe eines Komplexbildners, der für Aluminium oder Zink geeignet ist, auf die Metall-Oberfläche aufgetragen

Zum nass-chemischen Abscheiden von Mangandioxid wird vorzugsweise durch Spritzen mit normaler Lackiertechnik durchgeführt. Mit einem solchen Verfahren werden beispielsweise verschiedene Ausgangstanzen von Manganverbindungen aufgetragen, die miteinander zum Mangandioxid reagieren. Solche Ausgangssubstanzen sind beispielsweise Kaliumpermanganat (KMn(VII)O₄) und Mangannitrat (Mn(NO₃)₂)). Es findet eine Komproportionierung statt, bei dem sich Mangandioxid mit Mangan(IV) bildet.

In einer besonderen Ausgestaltung wird das Verfahren bzw. werden einzelne Verfahrens-Schritte des Verfahrens mehrmals durchgeführt. Beispielsweise werden Silber und Mangandioxid wiederholt aufgetragen. In einer besonderen Ausgestaltung werden daher das elektro-chemische Abscheiden des Silbers und das elektro-chemische Abscheiden des Hilfs-Metalls, das Entfernen des Hilfs-Metalls und/oder das Befüllen der Silber-Poren mit Mangandioxid wiederholt durchgeführt. Um eine bestimmte Schicht- Dicke der Schutz- Schicht, insbesondere der Mangandioxid-Schicht zu erreichen, kann das Befüllen der Silber-Poren mit Mangandioxid wiederholt durchgeführt werden.

Das Entfernen des Hilfs-Metalls wird vorzugsweise elektro-chemisch und/oder nass-chemisch.

Das weitere Metall ist unedler als Silber. Vorzugsweise werden als Hilfs-Metall Kupfer, Aluminium und/oder Zink verwendet.

Durch elektrochemisches (galvanisches) Abscheiden des Silbers und des Hilfs-Metalls wird die Ausgangs-Schicht gebildet. Es ist aber auch vorteilhaft, das Hilfs-Metall wieder elektro-chemisch aus den Poren zu entfernen. In einer besonderen Ausgestaltung werden daher zum wiederholten Durchführen des elektro-chemischen Abscheidens des Silbers und des elektro-chemischen Abscheidens des Hilfs-Metalls sowie des Entfernens des Hilfs-Metalls zyklische Voltammetrie durchgeführt. Es wird Zyklovoltammetrie angewandt.

Bei Verwendung von Aluminium entsteht beispielsweise durch die (weitgehende) Entfernung des Aluminiums aus den Silber-Poren Raney-Silber. Die resultierende poröse Silber-Schicht weist damit Raney-Silber auf. Das Entfernen von Aluminium aus den Silber-Poren gelingt beispielsweise nass-chemisch mittels einer Hydroxid-Lösung eines Alkali-Metalls.

In einer besonderen Ausgestaltung wird als Hilfs-Metall Kupfer verwendet und das elektro-chemische Abscheiden des Silbers und/oder das elektro-chemische Abscheiden des Kupfers werden aus einer stark basischen Cyanid-Lösung mit (Silber-Ionen und Kupfer-Ionen) durchgeführt.

In einer weiteren Ausgestaltung wird für das Aufbringen der porösen Silber-Schicht Raney-Silber gebildet. Dazu wird beispielsweise vorab gebildetes Raney-Silber auf der Metall-Oberfläche aufgetragen. Die poröse Silber-Schicht weist also Raney-Silber auf. Raney-Silber enthält neben elementarem Silber elementares Aluminium. Das elementare Aluminium kann mit einer alkalischen Lösung (z.B. Hydroxyd-Lösung eines Alkali-Metalls) einfach entfernt werden, so dass die poröse Silber-Schicht verbleibt.

Insbesondere wird zum Befüllen der Silber-Poren mit Mangandioxid ein nass-chemisches Abscheiden von Mangandioxid auf der porösen Silber-Schicht durchgeführt. Mangandioxid wird als Mangandioxid-Schicht auf der porösen Silber-Schicht aufgetragen. Dadurch werden die Silber-Poren automatisch mit Mangandioxid befüllt. Es bildet sich ein Schicht-Aufbau aus der porösen Silber-Schicht und der Mangandioxid-Schicht. Durch diesen Schicht-Aufbau ist automatisch für eine gute Haftung der Mangandioxid an der Metall-Oberfläche gesorgt.

Zusammenfassend sind mit der Erfindung folgende Vorteile verbunden:
- Die Schutz-Schicht auf der Metall-Oberfläche wirkt durch das Hemmen der Anreicherung von biologischem Material antibakteriell und/oder antiviral und kann somit apathogen wirken.
- Mit Hilfe der Schutz-Schicht kann die Bildung eines Bio-Films auf der Metall-Oberfläche (Fouling) gehemmt werden.
- Die poröse Silber-Schicht sorgt für eine gute Anhaftung der Mangandioxid-Schicht zum Befüllen der Silber-Poren.
- Mit der Schutz-Schicht werden keine Teilchen (z. B. Ionen oder Nanoteilchen) an die Umwelt abgegeben.
- Die Schutz-Schicht bzw. Material der Schutz-Schicht werden keine toxischen Verbindungen (z. B. Formaldehyd, Phenole, Hypochlorit, Cuprit, Kupferpyridin oder Silber- Nanopartikel an die Umwelt abgegeben.
- Da die Mikro-Zellen mit der Silber- und Mangandioxid-Beschichtung viele Katalyse-Zyklen durchlaufen können, brauchen die antimikrobiellen bzw. antiviralen Wirkstoffe weder aufgefüllt oder noch ersetzt werden.

Anhand von Ausführungsbeispielen und der dazugehörigen Figuren wird die Erfindung näher beschrieben. Die Figuren sind schematisch und stellen keine maßstabsgetreue Abbildung dar.

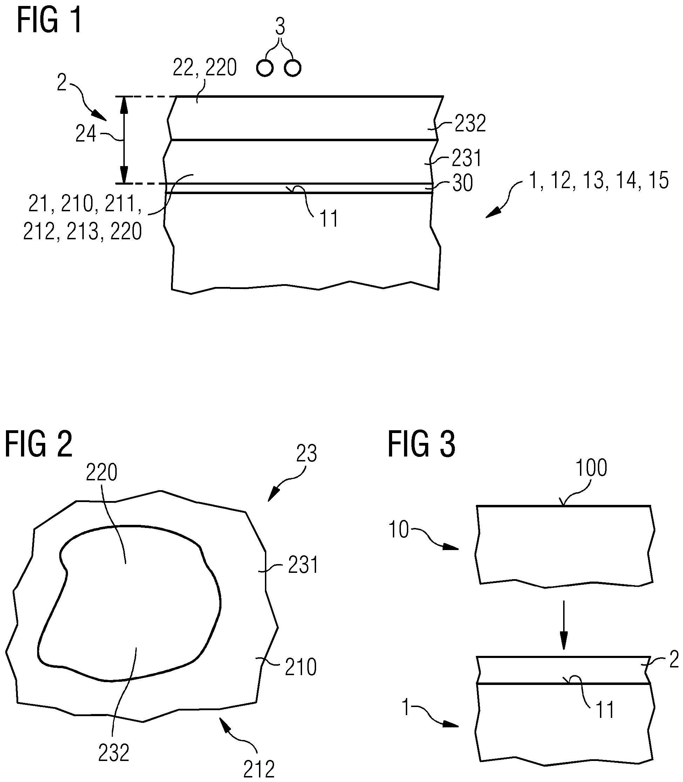

Figur 1 zeigt im Querschnitt einen Ausschnitt eines Metall-Objekts mit der Schutz-Schicht auf einer Metall-Oberfläche.
Figur 2 zeigt im Querschnitt einen Ausschnitt porösen Silber-Schicht der Schutz-Schicht.
Figur 3 zeigt ein Verfahren zum Herstellen des Metall-Objekts.
Figur 4 zeigt verschiedene Oxidations-Stufen von Mangan und deren Umwandlung ineinander.
Figuren 5A bis 5C zeigen mögliche Reaktionen an der Mikro-Kathode.
Figuren 6A und 6B zeigen mögliche Reaktionen an der Mikro-Anode.
Figur 7A zeigt die Strukturformel von Methionin.
Figur 7B zeigt die Strukturformel von Serin.
Figur 7C zeigt die Oxidation von Adenin (Nukleinbase in DNA u. RNA).

Gegeben ist ein Metall-Objekt 1 in Form eines Metall-Fadens 12, eines Metall-Drahts 13, eines Metall-Stabs 14 und eines Metall-Geflechts (Streck-Material) 15 aus einer Vielzahl von Metall-Drähten 13. Das Metall-Objekt weist auf einer Metall-Oberfläche 10 des Metall-Objekts 1 eine Schutz-Schicht 2 auf. Das Metall-Objekt ist aus einer Eisen-Legierung.

Die Schutz-Schicht 2 dient einem Hemmen einer Anreicherung bzw. einer Ansiedlung von biologischem Material 3 auf der Metall-Oberfläche 10. Durch die Schutz-Schicht 3 wird die Ansiedlung von Mikroorganismen oder Viren auf der Metall-Oberfläche 10 erschwert bzw. unterbunden. Das Metall-Objekt 1 ist dadurch gekennzeichnet, dass die Schutz-Schicht 2 eine poröse Silber-Schicht 21 aufweist, die neben Silber 210 eine Vielzahl von Silber-Poren 212 aufweist, und in den Silber-Poren 212 der Silber-Schicht 21 Mangandioxid 220 derart angeordnet ist, dass in Gegenwart von Wasser galvanische Mikro-Zellen 23 mit Mikro-Anoden 231 mit dem Silber 210 und mit Mikro-Kathoden 232 mit dem Mangandioxid 220 gebildet sind.

Die Silber-Schicht 21 weist im Hinblick auf die Poren 212 eine Porosität 211 von etwa 70 Vol.% auf. Gemäß einem weiteren Beispiel beträgt die Porosität etwa 80 Vol.%

Die Schicht-Dicke 24 der Schutz-Schicht 2 beträgt 5 µm. Zwischen der Metall-Oberfläche 10 und der porösen Silber-Schicht ist eine Haftvermittlungs-Schicht 30 mit Wood-Nickel angeordnet. Eine Schicht-Dicke der Haftvermittlungs-Schicht beträgt wenige 0,5 µm.

Gemäß eines Ausführungsbeispiels wird Raney-Silber (mit Aluminium) zunächst hergestellt und dann auf die Ausgangs-Metall-Oberfläche 100 des Ausgangs-Metall-Objekt 10 aufgetragen. Die poröse Silber-Schicht 21 des Metall-Objekts weist also Raney-Silber 213 auf.

Zum Herstellen des Metall-Objekts 1 werden folgende Verfahrensschritte durchgeführt:
a) Bereitstellen eines Ausgangs-Objekts 10 des Metall-Objekts 1 mit einer Ausgangs-Metall-Oberfläche 100 der Metall-Oberfläche 11 und
b) Anordnen der Schutz-Schicht 2 auf der Ausgangs-Metall-Oberfläche 100 derart, dass das Metall-Objekt 1 entsteht.

Zum Anordnen der Schutz-Schicht 2 auf der Ausgangs-Metall-Oberfläche 100 werden in einem alternativen Verfahren folgende Verfahrens-Schritte durchgeführt:
ba) Elektrochemisches Abscheiden des Silbers 210 und elektrochemisches Abscheiden von Kupfer als Hilfs-Metalls 230 auf der Ausgangs-Metall-Oberfläche 100, so dass eine Ausgangs-Schutz-Schicht 20 der Schutz-Schicht 2 entsteht,
bb) Entfernen des Kupfers 230 aus der Ausgangs-Schutz-Schicht 20, so dass die Silber-Poren 212 der porösen Silber-Schicht 21 gebildet werden, und
bc) Befüllen der Silber-Poren 212 mit Mangandioxid 220.

Das elektro-chemische Abscheiden des Silbers 210 und/oder das elektro-chemische Abscheiden des Kupfers 230 erfolgt zyklovoltammetrisch aus einer stark basischen Cyanid-Lösung.

Zum Erreichen der Schicht-Dicke der Schutz-Schicht von 5pm werden das elektro-chemische Abscheiden des Silbers 210 und das elektro-chemische Abscheiden des Kupfers 230 und das Entfernen des Kupfers 230 wiederholt durchgeführt.
Zum Befüllen der Silber-Poren 212 mit Mangandioxid 210 wird auf die poröse Silber-Schicht 21 eine Mangandioxid-Schicht 23 mit Hilfe eines nass- chemischen Spritz-Verfahrens in Form von Lackier-Technik aufgetragen. Das Befüllen der Silber-Poren 212 mit Mangandioxid 220 kann zum Erreichen einer bestimmten Schicht-Dicke wiederholt durchgeführt werden.

Die Wirkung der Schutz-Schicht 2 auf der Metall-Oberfläche 11 des Metall-Objekts 1 gegen die Anreicherung von biologischem Material wird mit Hilfe eines Computer-Programm-Produkts mit einem digitalen Zwilling für das Metall-Objekt 1 simuliert.

Folgende Details zur elektrochemischen Abscheidung der hochporösen Silber-Schicht sind noch zu erwähnen:
Da die Abscheidung der hochporösen Silber-Schicht 21 auf der zyklischen Voltammetrie beruht, wird als Arbeitselektrode ein Draht oder Stab aus Stahl und eine Referenzelektrode verwendet. Als Gegenelektroden können elektro-chemisch inerte WerkStoffe, wie Grafit oder platiniertes Titan angewandt werden.

Der Abscheidungs-Prozess besteht aus zwei Schritten:
1. Bei Potentialen negativer als 0 V vs. SCE (Standard-Kalomel- Elektrode) findet die Abscheidung einer Silber/- Kupfer-Legierung statt.
2. Bei Potentialen positiver als 0,3V vs. SCE wird das Kupfer aus der abgeschiedenen Silber/Kupfer-Legierung herausgelöst.

Auch andere Referenzelektroden sind denkbar, z.B.Silber/-Silberchlorid-Elektrode, Quecksilber/Quecksilberoxid-Elektrode bzw. reversible Wasserstoff-Elektrode.

Die Silber/Kupfer-Legierung wird aus einem Cyanid- haltigem Elektrolyten abgeschieden, der folgende Zusammensetzung hat:
Silbercyanid: 15-20 g/l
Kupfercyanid: 15-20 g/l
Kalium- oder Natriumcyanid: 5- 10 g/l
Kalium- oder Natriumhydroxid: 2- 10 g/l
Kaliumcarbonat- oder Natriumcarbonat: 20- 30 g/l

Bevor die Ausgangs-Metall-Oberfläche 100 des Ausgangs-Metall-Objekts 10 mit porösem Silber beschichtet wird, erfolgt eine Reinigung. Dazu durchläuft die Ausgangs-Metall-Oberfläche 100 eine alkalische Heiß-Entfettung und eine cyanidische Entfettung.

Zur Verbesserung der Haftfestigkeit des Silbers wird die Ausgangs-Metall-Oberfläche 100 noch mit einer dünnen Haftvermittlungs-Schicht 30 in Form einer Wood- Nickel-Schicht versehen.

Nach der Reinigung der Ausgangs-Metall-Oberfläche 100 und dem Auftragen der Wood-Nickel-Schicht 30 wird die Silber/KupferLegierung bei Potentialen kleiner OV abgeschieden. Dazu wird die Ausgangs-Metall-Oberfläche 100 in einer galvanischen Herstellungs-Zelle als Kathode geschaltet. Wird nun die Ausgangs-Metall-Oberfläche 100 bzw. die Metall-Oberfläche 11 umgepolt fungiert sie als Anode. Damit sich das Kupfer aus der Silber/Kupfer-Legierung herauslöst, wird das Potential der Metall-Oberfläche 11 bzw. der Ausgangs-Metall-Oberfläche 100 auf ca. plus 0,3 Volt versus SCE eingestellt. Dabei darf das positive Potential nicht über 0,8 V steigen, da sonst auch das Silber herausgelöst wird. Nach der elektrochemischen Spanungsreihe ist Silber edler als Kupfer (Ag⁺ + e⁻ = Ag: 0,8V; Cu²⁺ + 2e⁻ = Cu: 0,35 V). Durch diesen elektrochemischen Unterschied zwischen Silber und Kupfer kann eine poröse Silber-Schicht auf der Metall-Oberfläche erzeugt werden.

Zum Auftragen von Raney-Silber sind folgende Details zu erwähnen.

Raney-Silber bzw. eine Raney-Silber-Legierung wird durch Kaltgasspritzen aufgetragen. Für das Kaltgasspritzen werden zunächst Partikel aus der Raney-Silber-Legierung hergestellt. Die Bildung einer Silber/Aluminium-Legierung erfolgt entweder in einer Schmelze mit einer Temperatur oberhalb von 570°C, bei der eine schmelzflüssige Phase existiert, oder durch mechanisches Legieren von Silber-Pulver mit Aluminium-Partikeln.

Die Herstellung der Partikel aus Raney-Silber kann aus Raney-Silber über Schmelzen und anschließendem Mahlen stattfinden. Um eine leicht mahlbare Raney-Silber-Legierung zu erhalten, wird eine Schmelze aus Silber und Aluminium zwischen 700°C und 800°C hergestellt, die innerhalb von einigen Sekunden auf weniger als 100°C in einem Wasserbad abgeschreckt wird. Die nach diesem Verfahren hergestellte Silber/Aluminium-Legierungen sind spröder als langsam abgekühlte Silber/AluminiumLegierungen. In Kugelmühlen können sie leicht zu Pulvern verarbeitet werden, die für das Kaltgasspritzen geeignet sind.

Alternativ dazu werden die Partikel aus Raney-Silber über mechanisches Legieren erzeugt. Beim mechanischen Legieren werden in einer Hochenergie-Kugelmühle 40 µm bis 100 µm große Partikel aus Aluminium und Silber unter Vakuum oder InertgasAtmosphäre mit gehärteten Stahl-Kugeln mit einer maximalen relativen Geschwindigkeit von 19 m/s gemahlen. Durch die hohe Geschwindigkeit stoßen die Stahl-Kugeln (Mahlkörper) in der Prozess-Kammer zusammen und übertragen während der Kollision die kinetische Energie von den Mahl-Werkzeugen auf die Pulver-Partikel.

Die Raney-Silber-Legierung weist 40 Gew.% bis 85 Gew.% Silber und 15 Gew.% bis 60 Gew.% Aluminium auf. Anschließend kann die Raney-Silber-Legierung unter Vakuum oder InertgasAtmosphäre (Stickstoff, Argon oder Formiergas) zur Verstärkung des Zusammenhalts einer Wärmebehandlung bei T < 450 °C unterworfen werden. Dabei wird auf die Abwesenheit von Sauerstoff geachtet, damit das Aluminium nicht oxidiert wird.

Das Auftragen der Raney-Silber-Partikel erfolgt mittels Kaltgasspritzen (Cold Spray). Die Raney-Silber-Partikel, die durch Schmelzen von Silber und Aluminium und anschließendem Mahlen in einer Kugelmühle oder durch Hochenergie- Kugelmahlen erhalten werden, können sofort in den Partikelförderer einer Cold Spray- Anlage.
Diese Partikel werden mittels Kaltgasspritzen auf die zuvor bearbeitete Ausgangs-Metall-Oberfläche 100 bzw. auf die Metall-Oberfläche 11 aufgetragen.

Zum Auftragen der Partikel aus Raney-Silber eignet sich besonders gut aufgrund der Verfahrens-Technik das Kaltgasspritzen, da die Partikel bei diesem Beschichtungs-Verfahren keine Phasen-Umwandlung und keine Oxidation erfahren. Die Prozess-Temperatur (400° C) liegt unterhalb der SchmelzTemperatur der Raney-Silber/Aluminium-Legierung und die Partikel treffen in einem Inertgas Strom auf die Metall-Oberfläche. Somit bleibt die Reinheit des Ausgangs-Stoffs erhalten. Außerdem sind die Partikel durch ihre metallische Außenhaut plastisch verformbar und duktil.

Die Raney-Silber-Partikel werden mit sehr hoher Geschwindigkeit auf die Metall-Oberfläche aufgebracht. Dazu wird Prozessgas, Stickstoff oder Helium, auf einige hundert Grad erwärmt und unter hohem Druck in einer sogenannten Laval-Düse entspannt. Durch die konvergent- divergente Düsenform der Leval-Düse wird das Gas auf Überschall-Geschwindigkeit beschleunigt. Vor dem Düsen-Eingang werden die Raney-Silber-Partikel in den heißen Prozessgas-Strom eindosiert. Die injizierten Partikel werden erwärmt und mit dem austretenden Gas-Strahl auf so eine hohe Geschwindigkeit beschleunigt, dass sie ohne vorheriges An- oder Aufschmelzen beim Aufprall auf der Metall-Oberfläche fest anhaften und eine dichte Schicht bilden. Dabei verbinden sich die Partikel auf der Metall-Oberfläche und auch untereinander durch Kalt-Verschweißung. Zum Zeitpunkt des Aufpralls reicht die kinetische Energie für ein vollständiges Aufschmelzen der Partikel nicht aus.

Sobald die Metall-Oberfläche mit einer Schicht aus Raney-Silber/Aluminium-Legierung überzogen ist, wird das Aluminium selektiv aus der Legierung entfernt. Dabei wird das Aluminium mit einer 30 Vol.%-Natrium- oder Kaliumhydroxid- Lösung aus dem Raney-Silber bei 80°C unter 24-stündigem Rühren entsprechend folgender Gleichung herausgelaugt:

2 Al + 2 KOH + 6 H₂O = 2 K[Al(OH)₄] + 3 H₂

Zum Auswaschen des Aluminiums wird dem Elektrolyten noch eine 10 Vol.%-Lösung aus Natrium- Kalium- Tartrat- Tetrahydrat hinzugefügt, um eine Präzipitat-Bildung zu verhindern, wenn das gebildete Aluminat wieder in Aluminiumhydroxid und Hydroxid- Ionen zerfällt. Das Tartrat-Salz verhindert eine Präzipitat- Bildung, in dem es als Komplex-Bildner agiert:

[Al(OH)₄]⁻ + n(C₄H₄O⁶)²⁻ = [Al(OH)₃(C₄H₄O₆)ₙ]²⁻ + OH-

Dadurch werden die Silber-Poren vor einer Fällungs-Reaktion von Aluminiumhydroxid gemäß folgender Gleichung geschützt.

[Al(OH)₄]⁻ = Al(OH)₃ + OH⁻

Zur Abscheidung von Mangandioxid in den Silber-Poren werden folgende Einzelheiten angegeben:
Auf das hochporöse Silber, das entweder durch eine spezielle elektrochemische Abscheidung oder durch Kaltgasspritzen von Raney-Silber-Legierungs-Partikeln erzeugt wird, kann nass-chemisch durch Spritzen mit normaler Lackier-Technik eine Mangandioxid-Schicht appliziert werden. Mangandioxid wird aus Kaliumpermanganatlösung und einer Lösung aus Mangan(II)-Nitrat oder Mangan(II)-Acetat hergestellt. Vor der Reaktion der beiden Lösungen wird die Mangan(II)-Nitrat oder die Mangan(II)-Acetat-Lösung auf pH 8 eingestellt entweder durch Zugabe von Ammoniak oder durch Zugabe einer basisch wirkenden Aminosäure wie L-Lysin. Andere basische Aminosäuren wie L-Histidin oder L-Arginin können ebenfalls verwendet werden. Dabei werden die Kaliumpermanganat-Lösung und die basische Mangan(II)-Salz-Lösung getrennt über zwei Düsen simultan auf das poröse Silber gespritzt. In dem Moment, in dem die beiden Lösungen aufeinandertreffen, wird das Mangandioxid gebildet und schlägt sich als Präzipitat auf der Mangandioxid-Schicht nieder. Über eine Komproportionierung wird aus Mn⁺⁷ und Mn⁺² Braunstein hergestellt. Bei der Reaktion wird das Mangan(II)-Salz vom Kaliumpermanganat zu Mangan(IV)-Oxid oxidiert und das Kaliumpermanganat wird vom Mangan(II)-Salz zu Mangan (IV)-Oxid reduziert. Das resultierende Mangan(IV)-Oxid stammt sowohl aus dem Reduktionsmittel als auch aus dem Oxidationsmittel.

Unter Umständen sollen nur die Silber-Poren das Mangandioxid beinhalten. Dazu kann überschüssiges Spritzmedium von der Silberoberfläche abgestreift werden. Anschließend wird das in den Poren abgeschiedene Präzipitat 24 Stunden bei 110°C unter Luftsauerstoff in einem Ofen getrocknet.

Da Mangandioxid nach dem elektrochemischen Standardpotential edler als Silber ist, bildet sich zwischen dem Braunstein und dem Silber in Gegenwart von Feuchtigkeit ein elektrisches Feld aus. Damit können an dem Braunstein und dem Silber Redox-Prozesse ablaufen und durch die dabei stattfindenden Elektronen-Übergänge Mikroben abgetötet werden.

Durch die spezielle Schutz-Schicht mit Silber und Braunstein kann sich in Gegenwart von Wasser oder Feuchtigkeit (Luftfeuchtigkeit, Schweiß, Sekreten und Exkrementen von Lebewesen) eine galvanische Mikro-Zelle (mikrogalvanisches Element) bilden. Dabei werden mikroelektrische Felder erzeugt. An der Mikro-Kathode (Mangandioxid) werden aus dem im Wasser gelöstem Sauerstoff elektrochemisch- katalytisch reaktive Sauerstoffspezies (zum Beispiel Hyperoxid) gebildet. Diese reaktiven Sauerstoffspezien töten Mikroorganismen oxidativ ab.

Zum Beispiel kann der Schwefel in einer schwefelhaltigen proteinogenen Aminosäure zu einem Sulfoxid oder die Hydroxyl-gruppe in der Seitenkette einer proteinogenen Aminosäure zu einer Aldehyd- oder Carboxylgruppe oxidiert werden. Ein derart chemisch veränderte Aminosäure kann nicht mehr am Aufbau lebensnotwendiger Proteine teilnehmen. Folglich stirbt und der Mikroorganismus.

Nukleinbasen, die in den Nukleinsäuren DNA und RNA enthalten und für die genetische Information verantwortlich sind, bestehen aus einem Grundgerüst heterocyclischer aromatischer Amine (Purine und Pyrimidine) mit Doppelbindungen. Radikale, wie Superoxid (Hyperoxid) oder Hydroxylradikale) mit einzelnen ungepaarten Elektronen in der äußeren Elektronenhülle greifen die Doppelbindungen an, in dem sie mit den π- Elektronen ihre äußere Elektronenhülle auffüllen, um die Edelkonfiguration zu erreichen. Damit geht ein Verlust des Doppelbindungssystem im Ring einher und die Nukleinbasen können ihre Information zur Proteinbiosynthese nicht mehr weitergeben und die Replikation der Nukleinsäuren DNA und RNA wird unterbrochen. Auch hier stirbt der Mikroorganismus ab.

An der Mikro-Anode (Silber) wird bei Kontakt mit einer geladenen Hülle des Mirko-Organismus ein katalytisch unterstützter Redox-Prozess ausgelöst. Auch in diesem Fall werden die Mikroorganismen oxidativ zerstört. Die Mikro-Anode kehrt dann wieder in ihren Ausgangszustand zurück.

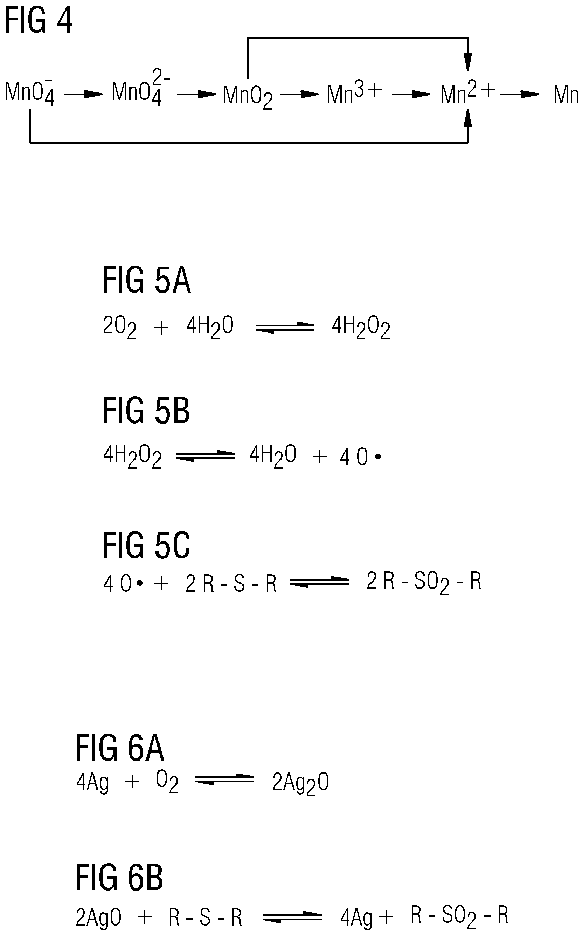

An der Mikro-Kathode 21 finden Reaktionen gemäß Figuren 5A, 5B und 5C statt. An der Mikro-Anode 22 treten die Reaktionen gemäß Figuren 6A und 6B auf.

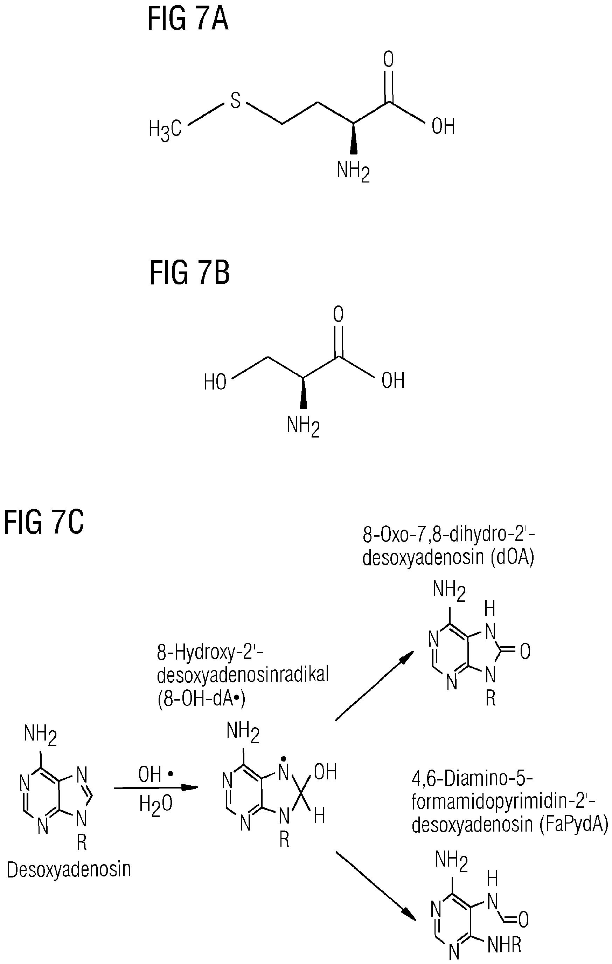

Die Figuren 7A und 7B (Methionin und Serin) sind Beispiele für proteinogene Aminosäuren, deren funktionelle Gruppen mit Hilfe der Erfindung oxidativ verändert werden können.

Figur 7C zeigt anhand der Oxidation von Adenin (Nukleinbase in DNA u. RNA) grundlegende Reaktionen, die mit Hilfe der Erfindung in Molekülen eines Mikroorganismus ausgelöst werden, sodass eine Vermehrung des Mikroorganismus und damit eine Anreicherung von vermehrten Mikroorganismen nicht möglich ist.

Bevor das Metall-Objekt mit der Schutz-Schicht realisiert wird, wird mit Hilfe eines Computer-Programm-Produkts die Wirkung der Schutz-Schicht simuliert. Dazu weist das Computer-Programm-Produkt einen digitalen Zwilling auf.

## Patentansprüche

1. Metall-Objekt (1) mit einer Schutz-Schicht (2) auf einer Metall-Oberfläche (10) des Metall-Objekts (1), wobei die Schutz-Schicht (2) für ein Hemmen einer Anreicherung von biologischem Material (3) auf der Metall-Oberfläche (10) ausgestaltet ist, **dadurch gekennzeichnet, dass**
- die Schutz-Schicht (2) eine poröse Silber-Schicht (21) aufweist, die neben Silber (210) eine Vielzahl von Silber-Poren (212) aufweist, und
- in den Silber-Poren (212) der Silber-Schicht (21) Mangandioxid (220) derart angeordnet ist, dass in Gegenwart von Wasser galvanische Mikro-Zellen (23) mit Mikro-Anoden (231) mit dem Silber (210) und mit Mikro-Kathoden (232) mit dem Mangandioxid (220) gebildet sind.

2. Metall-Objekt nach Anspruch 1, wobei die Silber-Schicht (2) im Hinblick auf die Silber-Poren (212) eine aus dem Bereich von 10 Vol.% bis 90 Vol.% und insbesondere aus dem Bereich von 50 Vol.% bis 90 Vol.% ausgewählte Porosität (211) aufweist.

3. Metall-Objekt nach Anspruch 1 oder 2, wobei zwischen der Metall-Oberfläche (10) und der porösen Silber-Schicht (21) eine Haftvermittlungs-Schicht (30) zur Verbindung der porösen Silber-Schicht (21) und der Metall-Oberfläche (10) angeordnet ist.

4. Metall-Objekt (1) nach einem der Ansprüche 1 bis 3, wobei das Metall-Objekt (1) und/oder die Metall-Oberfläche (10) elementares Eisen aufweisen.

5. Metall-Objekt (1) nach Anspruch 1 oder 4, wobei das Metall-Objekt (1) zumindest ein aus der Gruppe Metall-Faden (12) Metall-Draht (13), Metall-Stab (14) und ein Metall-Geflecht (15) ausgewähltes metallisches Werkstück aufweist.

6. Metall-Objekt (1) nach einem der Ansprüche 1 bis 5, wobei eine Schicht-Dicke (24) der Schutz-Schicht (2) aus dem Bereich von 1 µm bis 10 µm und insbesondere aus dem Bereich von 2 µm bis 5 µm ausgewählt ist.

7. Metall-Objekt (1) nach einem der Ansprüche 1 bis 6, wobei die poröse Silber-Schicht (21) Raney-Silber (25) aufweist.

8. Verfahren zum Herstellen eines Metall-Objekts (1) nach einem der Ansprüche 1 bis 7 mit folgenden Verfahrens-Schritten:
a) Bereitstellen eines Ausgangs-Objekts (10) des Metall-Objekts (1) mit einer Ausgangs-Metall-Oberfläche (100) der Metall-Oberfläche (11) und
b) Anordnen der Schutz-Schicht (2) auf der Ausgangs-Metall-Oberfläche (100) derart, dass das Metall-Objekt (1) entsteht.

9. Verfahren nach Anspruch 8, wobei zum Anordnen der Schutz-Schicht (2) ein thermisches Spritz-Verfahren angewendet wird.

10. Verfahren nach Anspruch 9, wobei zum Anordnen der Schutz-Schicht (2) auf der Ausgangs-Metall-Oberfläche (100) folgende Verfahrens-Schritte durchgeführt werden:
ba) Elektrochemisches Abscheiden des Silbers (210) und elektrochemisches Abscheiden zumindest eines Hilfs-Metalls (230) mit einem Redox-Potential unter dem von Silber (210) auf der Ausgangs-Metall-Oberfläche (100), so dass eine Ausgangs-Schutz-Schicht (20) der Schutz-Schicht (2) entsteht,
bb) Entfernen des Hilfs-Metalls (230) aus der Ausgangs-Schutz-Schicht (20), so dass die Silber-Poren (212) der porösen Silber-Schicht (21) gebildet werden, und
bc) Befüllen der Silber-Poren (212) mit Mangandioxid (220).

11. Verfahren nach Anspruch 10, wobei das elektro-chemische Abscheiden des Silbers (210) und das elektro-chemische Abscheiden des Hilfs-Metalls (230), das Entfernen des Hilfs-Metalls (230) und/oder das Befüllen der Silber-Poren (212) mit Mangandioxid (220) wiederholt durchgeführt werden.

12. Verfahren nach Anspruch 10 oder 11, wobei zum wiederholten Durchführen des elektro-chemischen Abscheidens des Silbers (210) und des elektro-chemischen Abscheidens des Hilfs-Metalls (230) sowie des Entfernens des Hilfs-Metalls (230) zyklische Voltammetrie durchgeführt wird.

13. Verfahren nach einem der Ansprüche 10 bis 12, wobei als Hilfs-Metall (230) Kupfer, Aluminium und/oder Zink verwendet werden.

14. Verfahren nach Anspruch 13, wobei als Hilfs-Metall (230) Kupfer verwendet wird und das elektro-chemische Abscheiden des Silbers (210) und/oder das elektro-chemische Abscheiden des Kupfers (230) aus einer stark basischen Cyanid-Lösung mit durchgeführt werden.

15. Computer-Programm-Produkt mit einem digitalen Zwilling zur Simulation einer Wirkung der Schutz-Schicht (2) eines Metall-Objekts (1) nach einem der Ansprüche 1 bis 7.
